# EUROPÄISCHE PATENTSCHRIFT

(11) **EP 1 564 472 B1**
(45) Veröffentlichungstag und Bekanntmachung des Hinweises auf die Patenterteilung: **11.08.2010**
(21) Anmeldenummer: 04020451.3
(22) Anmeldetag: 27.08.2004
(51) Int. Cl.: F16L 33/207

(54) **Schlauchkupplung**
Hose coupling
Raccord pour tuyaux flexibles

(30) Priorität: 10.02.2004 DE 202004001987 U; 26.04.2004 DE 202004006631 U; 26.04.2004 DE 102004020474
(43) Veröffentlichungstag der Anmeldung: 17.08.2005
(73) Patentinhaber: Schieffer GmbH & Co Kommanditgesellschaft, 59557 Lippstadt (DE); Voswinkel KG, 58540 Meinerzhagen (DE)
(72) Erfinder: Wulf, Johannes, 59609 Anröchte (DE); Weiland, Georg, 58540 Meinerzhagen (DE); Schmitt, Frank, 58540 Meinerzhagen (DE)
(74) Vertreter: Herrmann, Uwe

(56) Entgegenhaltungen:
- DE-U- 29 920 371
- FR-A- 1 495 499
- GB-A- 2 199 100
- US-A- 4 018 462
- US-A- 4 498 691
- US-A- 5 317 799
- US-A- 5 344 196
- US-A1- 2002 158 468

## Beschreibung

Die vorliegende Erfindung betrifft eine Schlauchkupplung.

Derartige Schlauchanschlussstücke, Schlauchkupplungen bzw. Schlaucharmaturen finden in unterschiedlichsten Bereichen breite Verwendung. Ein Einsatzgebiet ist die Verwendung von Schlaucharmaturen als Hydraulik-Armaturen, wie sie beispielsweise bei Baumaschinen zum Einsatz kommen.

Schlauchanschlussstücke sind üblicherweise als Schlauchnippel oder Schlauchtüllen mit einem Profil zur Fixierung des Schlauchendes ausgeführt. Um Spitzen- und hohen Impulsbelastungen Stand zu halten, wird das Schlauchende in der Regel auf das Schlauchanschlussstück aufgepresst.

Ein Nachteil bei den heute gebräuchlichen Schlauchanschlussstücken besteht darin, dass es nach längerem Einsatz zu Undichtigkeiten und dem bekannten "Schwitzen", d. h. dem Austreten von Flüssigkeit an dem Schlauchanschlussstück und dem anschließenden Ausfall der Hydraulik-Leitungen kommen kann.

Ein Grund dafür ist, dass das Hydraulikmedium, beispielsweise Hydrauliköl, unter dem Impulsdruck zwischen dem Schlauchanschlussstück, d.h. beispielsweise dem Schlauchnippel, und der Schlauchinnenseele hindurchwandert und sodann am Schlauchende austritt. Mit zunehmender Einsatzdauer des Schlauches steigt die Wahrscheinlichkeit, dass der Schlauch aus diesem Grunde ausfällt. Die Gründe für die genannte Undichtigkeit können in Ermüdungserscheinungen der Schlauchinnenseele sowie aber auch in der Bildung von Rissen in der Innenseele des Schlauches im Bereich der Einbindung liegen.

Die vorliegende Erfindung betrifft eine Schlauchkupplung mit einem Schlauchanschlussstück, mit einer Pressfassung sowie einem Einsatz, wobei der Einsatz in der Pressfassung ruht, wobei im Montagefall der Einsatz und die Pressfassung das Schlauchanschlussstück mit dem darauf aufgeschobenen Schlauchende umfassen, wobei im Befestigungsfall der Einsatz den Schlauch hält, wobei die Schlauchkupplung durch Anwendung äußeren, radialen Drucks vom Montagefall in den Befestigungsfall überführbar ist und wobei die Längenänderung des Einsatzes beim Übergang vom Montagefall in den Befestigungsfall geringer ist als jene der Fassung.

Es ist daher die Aufgabe der vorliegenden Erfindung ein Schlauchkupplung der eingangs genannten Art dahingehend weiterzubilden, dass dessen Abdichteigenschaften verbessert werden.

Diese Aufgabe wird durch eine Schlauchkupplung mit den Merkmalen des Anspruchs 1 gelöst. Danach ist auf der Außenseite des Schlauchanschlussstückes wenigstens eine umlaufende Dichtrille bzw. -nut zur Abdichtung der Schlauchverbindung vorgesehen. Durch das Anbringen einer derartigen Dichtrille ergibt sich beim Verpressen/Konfektionieren des Schlauches eine spezielle Ausbildung einer Dichtkante in diesem Bereich. Das Schlauchmaterial fließt in die Dichtrille ein und verhindert - entsprechend der Wirkung beispielsweise einer O-Ring-Dichtung - das Passieren des Hydraulikmediums bzw. des Hydrauliköls.

Durch eine derartige Maßnahme kann ebenfalls wirksam verhindert werden, dass es im Bereich der Dichtrille des Schlauchanschlussstückes zu größeren Axialbewegungen kommt bzw. auf den Schlauch größere axiale Kräfte einwirken. Der Einsatz verhindert, dass die Längenänderung der Fassung vollständig auf den Schlauch übertragen wird. Vielmehr ergibt sich eine Relativbewegung zwischen Fassung und Einsatz, wobei der Einsatz eine verhältnismäßig geringe axiale Erstreckung erfährt und auf diese Weise den Schlauch vor unerwünschten axial wirkenden Kräften schützt. Somit ist es möglich, dass das Schlauchmaterial beim Verpressen radial in die Dichtrille eindringt und zumindest in diesem Bereich keine oder nur geringe axiale Kräfte erfährt. Auf diese Weise läßt sich ein sehr guter Sitz des Schlauchmaterials in der Dichtrille realisieren.

Grundsätzlich ist es möglich, dass nicht nur eine, sondern beispielsweise zwei oder mehr als zwei der genannten Dichtrillen zur Abdichtung der Schlauchverbindung vorgesehen sind.

Bei dem Schlauchanschlussstück kann es sich beispielsweise um eine Schlauchtülle oder einen Schlauchnippel handeln.

In bevorzugter Ausgestaltung der Erfindung befindet sich die Dichtrille im Bereich des Endes des Schlauchanschlussstückes, an dem der Schlauch auf das Schlauchanschlussstück aufgeschoben wird. Dadurch kann wirksam verhindert werden, dass das Hydraulikmedium überhaupt in den weiteren Bereich der Verpressung eindringen kann. Ein weiterer wesentlicher Vorteil der Anordnung der Dichtrille im Bereich des Aufschubendes des Schlauchanschlussstückes liegt darin, dass durch eine derartige Anordnung erreicht werden kann, dass die beim Verpressen des Schlauches auf das Schlauchanschlussstück einwirkenden Kräfte im wesentlichen in radialer Richtung und nicht in axialer Richtung verlaufen. Es ist besonders vorteilhaft, wenn beim Verpressen des Schlauches im Bereich der Dichtrille nur geringe oder keine axial wirkenden Kräfte auf den Schlauch einwirken, da diese zu einer Schädigung bzw. Rissbildung im Schlauchmaterial und darüber hinaus zu einem mangelhaften Sitz des Schlauchmaterials in der Dichtrille führen können.

Es ist darauf hinzuweisen, dass sich die Dichtrille nicht im Bereich des Endes des Schlauchanschlusstückes, über das der Schlauch aufgeschoben wird, befinden muß. Grundsätzlich kann auch eine oder mehrere Dichtrillen in dem anderen Endbereich des Schauchanschlussstückes oder an anderer Stelle angeordnet sein. Besonders vorteilhaft ist es, wenn die Dichtrille oder die Dichtrillen in beruhigten oder weitgehend beruhigten Zonen angeordnet sind, das heißt in Zonen, in denen sich keine oder möglichst geringe axiale Beanspruchungen des Schlauches ergeben. Auf diese Weise kann in besonders vorteilhafter Weise der gewünschte Dichteffekt erzielt werden.

Die genannten, in axialer Richtung wirkenden Kräfte werden üblicherweise durch die Pressfassung verursacht, die sich beim Verpressen nicht nur in radialer Richtung, sondern zusätzlich in axialer Richtung bewegt, wodurch die vorgenannten axial wirkenden Kräfte auch auf den Schlauch ausgeübt werden, was zu den genannten Schädigungen des Schlauches führen kann.

Dementsprechend besteht eine besonders vorteilhafte Ausgestaltung der Erfindung darin, dass der Schlauch auf dem Schlauchanschlussstück mittels einer Pressfassung verpresst ist, wobei die Dichtrille relativ zu der Pressfassung derart angeordnet ist, dass sich die Dichtrille in einem Bereich befindet, in dem die Pressfassung auf der Schlauch keine oder nur geringe in axialer Richtung des Schlauchanschlussstückes wirkende Kräfte ausübt.

Besonders vorteilhaft ist es, wenn die Dichtrille in einem Bereich des Schlauchanschlussstückes vorgesehen ist, der auf seiner Außenseite zylindrisch ausgeführt ist. Durch einen derartigen speziell gestalteten Bereich des Schlauchanschlussstückes (zylindrische, absolut runde, nicht profilierte Ausbildung) läßt sich beim Verpressen/Konfektionieren des Schlauches eine spezielle Ausbildung der Dichtkante bzw. eine O-Ring-Dichtwirkung in diesem Bereich erhalten.

An den zylindrischen Bereich kann sich ein konisch zulaufender Endbereich des Schlauchanschlussstückes anschließen, über den das Schlauchende aufgesteckt wird. Grundsätzlich kann anstelle eines konischen Endbereiches auch eine andere Ausgestaltung, beispielsweise ein zylindrisch ausgeführter Endbereich vorgesehen sein.

Der Bereich zur Aufnahme des Schlauchendes kann ein Profil zur Fixierung des aufgeschobenen Schlauchendes und dazu benachbart einen Bereich aufweisen, in dem die Dichtrille zur Abdichtung der Schlauchverbindung vorgesehen ist.

Weiterhin kann vorgesehen sein, dass der Bereich, in dem die Dichtrille angeordnet ist, zwischen dem Bereich, der das Profil zur Fixierung des aufgeschobenen Schlauchendes aufweist, und dem Endbereich des Schlauchanschlussstückes vorgesehen ist, an dem der Schlauch auf das Schlauchanschlussstück aufgeschoben wird.

Der die Dichtrille aufweisende Bereich kann sich somit zwischen dem Aufsteckende des Schlauchanschlussstückes und dem das Profil aufweisenden Bereich befinden.

In bevorzugter Ausgestaltung der Erfindung weist die Dichtrille zwei im wesentlichen parallele Wandungen auf. Diese Wandungen erstrecken sich parallel zueinander in Umfangsrichtung um das Schlauchanschlussstück. Dabei kann vorgesehen sein, dass die Wandungen senkrecht oder im wesentlichen senkrecht zu der Oberfläche des Bereiches des Schlauchanschlussstückes verlaufen, in dem die Dichtrille angeordnet ist. Selbstverständlich sind auch abweichende Profilformen beispielsweise mit schräg verlaufenden Wandungen oder Kombinationen derartiger Wandungen denkbar.

Die Dichtrille kann einen im wesentlichen U-förmigen Querschnitt aufweisen.

Weiterhin kann vorgesehen sein, dass die Tiefe und Breite der Dichtrille übereinstimmen bzw. sich im wesentlichen entsprechen. Ebenso ist es denkbar, dass die Tiefe der Dichtrille die Breite übersteigt oder dass die Breite der Dichtrille die Tiefe übersteigt. Die Dimensionierungen der Tiefe und Breite absolut und relativ zueinander hängen im Wesentlichen von dem geplanten Einsatzgebiet ab.

Bei dem Schlauchanschlussstück kann es sich um ein rohrartiges Kupplungselement handeln, das an einem Ende an eine Armatur anschließbar ist und am anderen Ende einen Schlauchnippel für einen Schlauch aufweist. Die Pressfassung kann zylinderförmig ausgeführt sein.

In bevorzugter Ausgestaltung der Erfindung besteht ein Ende des Kupplungselementes aus einem gerippten Schlaunippel, auf den der zu verbindende Hydraulikschlauch aufgeschoben wird. Am anderen Ende kann das Kupplungselement an einer Armatur angeschlossen werden. Zur Montage wird der Einsatz in die Pressfassung eingeschoben und beide über den Schlauchnippel geführt. Durch die Trennung des Einsatzes von der Pressfassung können beide Teile während des Verpressens unabhängig voneinander in longitudinaler Richtung fließen.

Dabei ist es besonders vorteilhaft, wenn die zu verpressende Materialmenge des Einsatzes kleiner ist als die der Pressfassung. Die durch die Komprimierung des Einsatzes hervorgerufene radiale Volumenänderung wird somit nur durch eine äußerst geringe longitudinale Längenänderung kompensiert. Hingegen kann die Pressfassung, welche wesentlich stabiler aufgebaut ist, um den inneren Druck zu halten, unabhängig von den Schlauchhaltevorrichtungen ihre Länge beim Komprimieren ändern.

In weiterer vorteilhafter Ausgestaltung der erfindungsgemäßen Schlauchkupplung weist der einteilige Einsatz eine wesentlich geringere Wandstärke als die Pressfassung auf. Dabei ist die Aufgabe des Einsatzes ausschließlich die Fixierung des Hydraulikschlauches in der Fassung, während die Pressfassung selber für die Stabilität der Schlauchkupplung sorgt.

In einer weiteren vorteilhaften Ausgestaltung der erfindungsgemäßen Schlauchkupplung ist der Einsatz nicht einteilig, sondern mehrteilig aufgebaut. Denkbar sind dabei mehrere Zylinderabschnitte, welche jeweils individuelle Schlauchhaltevorrichtungen aufweisen. Denkbar ist es auch, als Einsatz spiralförmig gebogenes Material, wie beispielsweise eine Spiralfeder, zu verwenden. Auf Grund der geringen Materialmenge würde auch hier bei der Verpressung keine nennenswerte longitudinale Längenänderung entstehen.

In einem weiteren vorteilhaften Ausführungsbeispiel der erfindungsgemäßen Schlauchkupplung könnte der Einsatz auch aus einem netzförmigen Material bestehen, dass in das netz des Hydraulikschlauches eingepresst wird. Durch die Aussparung in dem Drahtgeflecht, würde auch hier nur sehr wenig Material verpresst, so dass die oben genannten Nachteile nicht auftreten würden.

Weitere vorteilhafte Ausgestaltungen der Erfindung sind Gegenstand der Unteransprüche.

Die vorliegende Erfindung betrifft ferner eine Schlaucharmatur mit einem erfindungsgemäßen Schlauchanschlussstück oder mit einer erfindungsgemäßen Schlauchkupplung. Unter Schlaucharmatur wird jedes beliebige ein Schlauchanschlussstück aufweisendes oder mit einem Schlauchanschlussstück verbindbare Bauteil verstanden, wie beispielsweise Ventile, Verzweigungen, Winkel, Reduzierstücke, Pumpen etc.

Weitere Einzelheiten und Vorteile der Erfindung werden anhand eines in der Zeichnung dargestellten Ausführungsbeispiels näher erläutert.
- Fig. 1:: Eine teilweise geschnittene Seitenansicht des Schlauchanschlussstückes,
- Fig. 2:: eine Darstellung des Details X in Fig. 1,
- Fig. 3:: eine Darstellung des Schlauchanschlussstückes gemäß Fig. 1 mit verpresstem Schlauchende,
- Fig. 4:: eine Schnittzeichnung durch die verschiedenen Elemente der erfindungsgemäßen Schlauchkupplung,
- Fig. 5:: die Anordnung der verschiedenen Elemente der erfindungsgemäßen Schlauchkupplung im Montagefall, und
- Fig. 6:: die Anordnung der verschiedenen Elemente der erfindungsgemäßen Schlauchkupplung im Befestigungsfall.

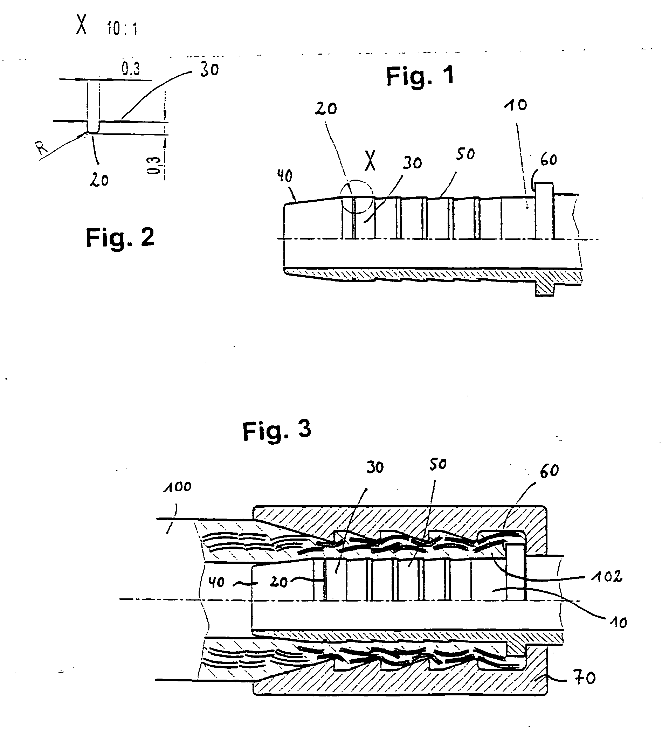

Fig. 1 zeigt in einer teilweise geschnittenen Darstellung das Schlauchanschlussstück 10 zur Aufnahme eines Schlauchendes. Es weist einen konisch zulaufenden Endbereich 40 auf, über den das Schlauchende aufgesteckt wird. Daran schließt sich der Bereich 30 an, der eine zylindrische, glatte Oberfläche aufweist und in dem die Dichtrille 20 vorgesehen ist. An den Bereich 30 schließt sich das Nippelprofil 50 an, dass aus einer Mehrzahl von hintereinander angeordneten konisch zulaufenden Abschnitten zur verbesserten Fixierung des Schlauchendes besteht. Ferner weist das Schlauchanschlussstück 10 den Anschlag 60 zur Festlegung der Endposition des aufgeschobenen Schlauches auf. Anstelle des genannten Nippelprofils sind auch andere Profilierungen oder gegebenenfalls ein nicht profilierter Bereich denkbar.

Wie aus Fig. 1 ersichtlich, befindet sich die Dichtrille 20 in der zu dem Aufsteckende weisenden Hälfte und vorzugsweise in dem das Aufsteckende umfassenden Drittel des Schlauchanschlussstückes 10.

Grundsätzlich ist es auch möglich die Dichtrille zusätzlich oder alternativ in anderen Bereichen des Schlauchanschlussstückes anzuordnen. Denkbar ist es beispiels-weise auch die Dichtrille in dem Bereich zwischen dem Anschlag 60 und dem Beginn des Nippelprofils 50 anzuordnen. Grundsätzlich ist es möglich, die Dichtrille oder die Dichtrillen in den beruhigten Zonen, das heißt in Zonen keiner oder möglichst geringer axialer Belastung des Schlauches anzuordnen, da auf diese Weise ein besonders guter Dichteffekt erzielt werden kann. Dies gilt unabhängig davon, ob eine Pressfassung mit oder ohne Einsatz vorgesehen ist.

Denkbar ist es somit, dass sich zusätzlich zu der in Figur 1 dargestellten Dichtrille 20 eine weitere Dichtrille in dem Bereich zwischen dem Anschlag 60 und dem Nippelprofil 50 erstreckt. Selbstverständlich können auch mehr als zwei Dichtrillen angeordnet sein.

Die Dichtrille 20 ist umlaufend ausgeführt und weist ein U-förmiges Querschnittsprofil auf, wie dies aus der Detaildarstellung X gemäß Fig. 2 ersichtlich ist. Wie sich aus den Bemessungen gemäß Fig. 2 weiter ergibt, sind die Tiefe und Breite der Dichtrille 20 identisch. Sie betragen in dem hier dargestellten Ausführungsbeispiel jeweils 0,3 mm. Selbstverständlich sind auch davon abweichende Abmessungen und unterschiedliche Größenverhältnisse zwischen Breite und Tiefe der Dichtrille 20 denkbar. Denkbar ist beispielsweise, dass die Tiefe der Dichtrille deren Breite übersteigt.

Das Schlauchanschlussstück 10 besteht aus Metall oder aus Kunststoff und weist einen kreisrunden Querschnitt auf.

Fig. 3 zeigt das Schlauchanschlussstück 10 mit dem darauf aufgesteckten und mittels der Pressfassung 70 verpressten Schlauchende 102 des Schlauches 100. Das Schlauchende 102 liegt an dem Anschlag 60 an und umgibt diesen aufgrund des Verpressens in Umfangsrichtung. Das Verpressen des Schlauchendes 102 bewirkt nicht nur, dass sich das Schlauchmaterial an das Nippelprofil 50 anlegt, sondern auch, dass das Gummi-Material des Schlauches in die Dichtrille 20 einfließt und somit verhindert, dass das geförderte Medium, beispielsweise Hydrauliköl in den Bereich des Nippelprofils 50 eindringen kann. Durch das Verpressen/Konfektionieren des Schlauches wird aufgrund der Dichtrille 20 eine Dichtkante/O-Ring in dem entsprechenden Bereich des Schlauchmaterials gebildet, wodurch eine wirksame Abdichtung erreicht wird.

Durch diesen Dichteffekt wird die Lebensdauer der Schlauchleitung wesentlich verlängert und eine der Hauptursachen für den Ausfall von Schlauchleitungen, besonders unter hoher Impulsbelastung, deutlich reduziert, wenn nicht gar ausgeschlossen. Hinsichtlich des verwendeten Schlauchanschlussstückes bzw. der verwendeten Schlaucharmatur gibt es keinerlei Beschränkungen. Die vorgenannte Verbesserung kann bei sämtlichen Schlauchanschlussstücken/Armaturen erzielt werden. Besondere Bedeutung kann die vorliegende Erfindung bei Baumaschinen oder Geräten mit hoher Impuls- und Spitzenbelastung, wie beispielsweise Kleinbaggern, Spritzgussmaschinen etc. haben.

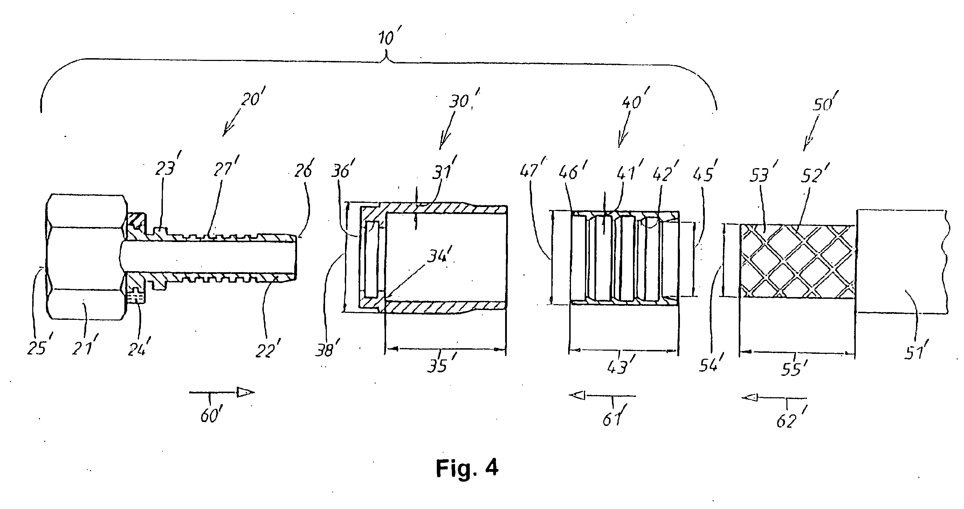

In Fig. 4 sind die Bauelemente der erfindungsgemäßen Schlauchkupplung 10' dargestellt. Sie besteht erstens aus einem Schlauchanschlussstück bzw. Kupplungselement 20'. Dabei handelt es sich um eine rohrförmige Baugruppe, die an ihrem hinteren Ende 26' einen gerippten Schlauchnippel 22' aufweist, auf den der Hydraulikschlauch 50' aufgeschoben werden kann. Um den Schlauchnippel 22' im Innenschlauch 53' des Hydraulikschlauches 50' zu fixieren, weist der Nippel 22' Rippen 27' auf. Dabei handelt es sich um trapezförmige radial umlaufende Rippen, die bei passendem Innendruchmesser des Schlauches das Kupplungselement halten. Im Inneren ist der Schlauchnippel hohl, um die Hydraulikflüssigkeit oder sonstige Flüssigkeiten, welche durch den angeschlossenen Schlauch fließen weiterzuleiten. Am vorderen Ende 25' des Kupplungselementes ist eine Anschlussmutter angebracht. Mit ihr kann das Kupplungselement 20' an eine nicht gezeigte Armatur angeschlossen werden. Beispielhaft ist hier ein Außensechskant 21' gezeigt, welcher im Inneren über ein Innengewinde verfügt. Im hier dargestellten Fall ist das Kupplungselement zweiteilig aufgebaut. Bei der Montage wird die Aufsteckmutter 21' vom hinteren Ende 26' über den Schlauchnippel auf den vorderen Teil des Kupplungselementes geführt. Die Aufsteckmutter 21' wird dann durch einen als Aufsteckteil ausgebildeten Anschlagflansch 24' gesichert.

Auf dem Schlauchanschlussstück 20', vorzugsweise in dessen Endbereich 26' befindet sich umlaufend eine in den Fig. 4 bis 6 nicht dargestellte Dichtrille, wie sie exemplarisch in den Fig. 1 bis 3 offenbart ist. Die Dichtrille kann sich in einem von dem Einsatz 40' überdeckten Bereich befinden oder auch zu diesem versetzt sein.

Das nächste Bauelement, aus dem die erfindungsgemäße Schlauchkupplung 10' aufgebaut ist, ist die Pressfassung 30'. Sie besteht aus einem zylinderartigen Abschnitt, mit einem zylinderförmigen Innenhohlraum. Die äußere Kontur der Pressfassung 30' kann vom jeweiligen Einsatzgebiet abhängen. So ist es durchaus denkbar, einen runden Querschnitt zu wählen oder einen mehreckigen. An jenem Ende der Pressfassung 30', welches über den Schlauchnippel 22' des Kupplungselementes 20' geschoben wird, befindet sich im Inneren eine Nut 36'. Sie wird im späteren Befestigungsfall über die Schulter 23' des Kupplungselementes 20' gepresst. Im Inneren der Pressfassung 30' befindet sich weiterhin eine Anschlagkante 34', an der sowohl der noch zu beschreibende Einsatz 40', als auch der Schlauch 50' anschlagen. Die Wanddicke 31' der Pressfassung ist dabei so gewählt, dass sie der radialen nach außen wirkenden Kraft durch die in der Leitung 50' fließende Flüssigkeit standhalten kann. Die Materialstärke 31' ist dabei wesentlich stärker, als die Materialstärke 41' des Einsatzes 40'. Dieser weist eine Länge 43' auf, welche geringer ist als die Innenlänge 35' der Fassung 30'. Wird der Einsatz 40' zur Montage in die Pressfassung 30' eingeschoben, ergibt sich somit ein überstehender Rand. Der Durchmesser 47' des Einsatzes 40' ist so gewählt, dass dieser formschlüssig in die Pressfassung eingeschoben werden kann. Somit ist zwar eine longitudinale Bewegung des Einsatzes 40' in der Fassung 30' möglich, aber keine radiale. Um ein leichtes Einführen des Einsatzes 40' bei der Montage zu ermöglichen, weist dieser an seinem vorderen Ende eine Anfasung 46' auf. In seinem Inneren sind Strukturierungen ausgearbeitet, welche als Schlauchgreifvorrichtungen wirken. Es kann sich dabei, wie hier angedeutet, um radial umlaufende sägezahnförmige Rippen 42' handeln. Möglich sind aber auch andere Strukturen und Geometrien, wie etwa dreiecksartige Rippen oder individuelle Haltepunkte.

Bei der Montage der Schlauchkupplung 10' auf den Schlauch 50' wird dieser im allgemeinen an einem Ende geschält. Dabei wird das Obergummi 51' des Schlauches 50' bis auf das Drahtgeflecht 52' entfernt. Es darf dabei nicht beschädigt werden, da es dem Innenschlauch 53' die Druckfestigkeit verleiht. Der Durchmesser 54' des geschälten Schlauches ist dabei so gewählt, dass er kleiner oder übereinstimmend mit dem Innendurchmesser 45' des Einsatzes ist. Gleiches gilt für die Länge 55' des zu schälenden Bereiches.

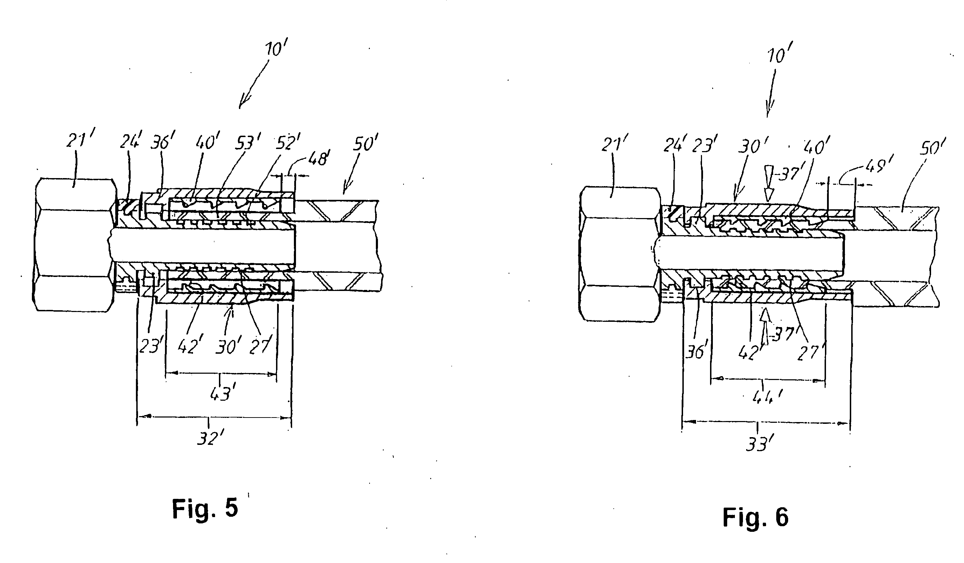

Zur Montage der erfindungsgemäßen Schlauchkupplung 10' wird zunächst der Einsatz 40' in Richtung des Bewegungspfeils 61' in die Pressfassung 30' eingeführt. Dabei sollte die Anfasung 46' an der Anschlagkante 34' zum Liegen kommen. Anschließend wird das Kupplungselement 20' in Richtung des Bewegungspfeils 60' in die Fassung eingeführt. Dieses geschieht so lange, bis der Anschlagflansch 24' in Kontakt ist mit der Pressfassung 30'. Als letzter Schritt wird dann der geschälte Abschnitt 55' des Schlauches 50' in Richtung des Bewegungspfeils 62' in die Schlauchkupplung 10' eingeschoben. Die sich im Montagefall ergebende Anordnung der einzelnen Elemente zueinander ist in Fig. 5 dargestellt. In dem dort dargestellten Montagefall sind sämtliche Elemente der Schlauchkupplung 10' und der Schlauch 50' ineinander geschoben, aber noch nicht miteinander verpresst. So greifen die Schlauchgreifvorrichtungen 42' noch nicht in den Schlauch 50' ein. Des weiteren liegt der Innenschlauch 53' nur formschlüssig auf den Rippen 24' des Schlauchnippels 23' auf.

Um die Schlauchkupplung 10' abzugssicher auf den Hydraulikschlauch zu montieren, bedarf es eines äußeren radialen Druckes, der durch die in Fig. 6 eingezeichneten Druckpfeile 37' verdeutlicht werden soll. Dieser auf die Pressfassung 30' wirkende äußere Druck 37' führt zu einer Komprimierung sowohl der Pressfassung als auch des Einsatzes. Dadurch werden die Schlauchgreifvorrichtungen 42' in das Drahtgewebe 52' des Schlauches 50' eingepresst und führen zu einer festen Verbindung zwischen Schlauchanschlussstück 10' und Schlauch 50'. In Fig. 6 ist dieser als Befestigungsfall bezeichnete Zustand nach dem Verpressen der Fassung 30' und des Einsatzes 40' auf den Schlauch 50' dargestellt. Die zahnförmige Strukturierung 42' des Einsatzes 40', welche als Schlauchgreifvorrichtung wirkt, ist in das Drahtgeflecht 52' des Schlauches eingedrückt. Der Einsatz 40' und die Fassung 30' sind nach dem Verpressen kraft- und formschlüssig verbunden.

Beim radialen Zusammendrücken der Pressfassung wird deren Durchmesser verkleinert. Da die Hülse nur begrenzt weit zusammengepresst werden kann, führt diese radiale Kompression zu einem Fließen des Materials in longitudinaler Richtung. Das Material des Körpers weicht dem äußeren Druck durch Verlängerung aus. Beim Verpressen von Schlauchanschlussstück nach dem Stand der Technik führt diese Längung der Pressfassungen dazu, dass der anzuschließende Schlauch nicht mehr ideal in der Schlauchanschlussstück liegt. Insbesondere das Schlauchende befindet sich häufig nicht mehr an der dafür vorgesehenen Anschlagkante. Des weiteren wandern die Strukturierungen der Schlauchhaltevorrichtungen in den Drahtgeflechten. Um dieses zu verhindern, ist die erfindungsgemäße Schlauchkupplung mit einem Einsatz 40' bestückt, der beim Übergang vom Montagefall in den Befestigungsfall eine geringere Längenänderung besitzt als die Fassung.

Daraus ergibt sich der wesentliche Vorteil, dass auf den Schlauch 50' nur geringe axiale Kräfte eingeleitet werden, wodurch sich die Lebensdauer des Schlauches 50' erhöhen läßt. Zudem kommt es im Bereich der Dichtrille zu keinen oder nur zu geringen axialen Verformungen des Schlauches 50', was dazu führt, dass das radial in die Dichtrille eingepresste Schlauchmaterial nicht in der Dichtrille verformt wird, sondern statt dessen einen guten Sitz aufweist. Die axialen Verformungen der Pressfassungen müssen bei dieser Ausgestaltung der Erfindung nicht bzw. nicht vollständig vom Schlauchmaterial aufgenommen werden. Sie werden aufgrund der möglichen Relativbewegung zwischen Fassung und Einsatz nicht oder nur unwesentlich auf den Schlauch übertragen.

Wie Fig. 5 verdeutlicht, ist die Länge 43' des Einsatzes 40' geringer, als die des sie aufnehmenden Innenlagers der Pressfassung 30'. Somit entsteht bei vollständig eingeschobenen Einsatz ein Randbereich mit einer Länge 48'. Wird nun die Schlauchkupplung 10'durch einen äußeren Druck 36' verpresst, so führt dieses zu einer Längung der Pressfassung 30'. Durch die Reduzierung des Außendurchmessers vergrößert sich die Länge der Pressfassung von der Montagelänge 32' auf die Befestigungslänge 33'. Der Druck 37' führt ebenfalls zu einer Komprimierung des Einsatzes 30'. Da dieser aber eine wesentlich geringere Wandstärke 31' als die Pressfassung aufweist, ist die Längenänderung sehr viel geringer. Im Idealfall stimmen die Länge des Einsatzes im Montagefall 43' mit dem im Befestigungsfall 44' überein. Wie Fig. 6 verdeutlicht, ergibt sich als Ergebnis der Verpressung eine gesteigerte Längendifferenz 49' zwischen der Länge des Einsatzes 44' und der Innenlänge 35' der Pressfassung.

Da die Pressfassung 30' und der Einsatz 40' zwei getrennte Bauelemente sind, können sie sich unabhängig voneinander in longitudinaler Richtung ausdehnen. Somit beeinflußt die Längenänderung der Pressfassung 30' beim Verpressen nicht die Position bzw. Länge des Einsatzes 40'. Der Schlauch 50' verbleibt während des Pressvorgangs in der dafür vorgesehenen Position. Das Risiko, dass das Schlauchende nicht mehr an dem Anschlagflansch 34' liegt, und somit eine Leckage entstehen könnte, wird deutlich verringert. Des weiteren wandern die Schlauchhaltevorrichtungen 42' nicht mehr in dem Drahtgeflecht 52', so dass eine erhöhte Drucksicherheit erreicht wird.

Um die erfindungsgemäße geringere Längenausdehnung des Einsatzes 40' beim Übergang von Montagefall in den Befestigungsfall zu erreichen, muß die Materialmenge des Einsatzes immer geringer sein, als die der Fassung. Dieses läßt sich dadurch erreichen, dass der Einsatz sehr dünnwandig ist. Um dieses zu erreichen könnte der Einsatz 40' auf seiner Außenfläche Vertiefungen aufweisen. Gleichfalls denkbar wären Aussparungen im Einsatz. In einer weiteren Ausführungsform des erfindungsgemäßen Gegenstandes könnte der Einsatz 40' nicht einteilig aufgebaut sein, sondern aus mehreren Zylinderabschnitten bestehen. Dadurch wäre es leichter möglich die Schlauchgreifvorrichtungen individuell an das Muster des Drahtgeflechtes 52' anzupassen. Damit ergäbe sich eine verbesserte Verbindung zwischen der Schlauchanschlussstück und dem Schlauch.

In einer weiteren Ausführung der erfindungsgemäßen Schlauchanschlussstück 10' könnte es sich bei den Schlauchgreifvorrichtungen 42' auch um Stauchungsfalten des Einsatzes 40' handeln. Bei der Herstellung des Einsatzes könnte dieser zuerst aus einem zylinderförmigen Material bestehen, was entlang spezieller Stauchfalten durch äußere Einwirkung gestaucht wird, so dass im Inneren Vorsprüngen entstehen würden, die sich später in das Schlauchgewebe eindrücken. Allerdings könnte es sich auch als vorteilhaft herausstellen, nicht nur radial umlaufende Strukturierungen als Schlauchgreifvorrichtung 42' zu verwenden. Möglich wäre es einzelne in das Innere des Einsatzes hineinragende Vorsprünge zu benutzen. Dabei sind stiftartige, dornartige oder pyramidenartige Vorsprünge vorteilhaft, die sich beim Verpressen in das Gewebemuster einbohren.

In einer weiteren Ausgestaltung der erfindungsgemäßen Schlauchkupplung 10' könnte es sich bei dem Einsatz 30' auch um ein spiralförmig gebogenes Material, wie beispielsweise eine Spiralfeder, handeln. Da hier nur eine sehr geringe Materialmenge verpresst würde, ergäbe sich ebenfalls keine signifikante Längenänderung. Die Spiralfeder müßte dabei einen Außendurchmesser aufweisen, der entsprechend jenem Innendurchmesser der Pressfassung 30' ist. Somit wäre ein formschlüssiges Einführen der Spiralfeder in die Pressfassung möglich. Um ein besseres Verbinden des spiralförmig geformten Materials mit dem Drahtgeflecht 52' des Schlauchs 50' zu erreichen, könnte dieses einen rautenförmigen Querschnitt aufweisen. Je nach Anwendungszweck könnte es aber auch vorteilhaft sein, einen runden, rechteckigen oder dreiecksartigen Querschnitt des Materials für den Einsatz zu wählen.

Zur Kostenreduzierung bei der Herstellung könnten sowohl Pressfassung 30' als auch Einsatz 40' aus Automatenstahl hergestellt werden. Da die Längenänderung des Einsatzes 40' beim Verpressen nur noch gering bis vernachlässigbar ist, müßte dieser vor der Verwendung nicht mehr spannungsfrei geglüht werden. Bei mehrteilig aufgebauten Schlauchanschlussstück nach dem Stand der Technik ist dieses nicht möglich, da die durch das Verpressen entstehenden Spannungen innerhalb des Einsatzes so groß sind, dass Risse entstehen. Auf Grund der erfindungsgemäßen geringen Längenänderung des Einsatzes, kann auf das kostenintensive Glühen bei der hier offenbarten Schlauchanschlussstück verzichtet werden.

## Patentansprüche

1. Schlauchkupplung (10') mit einem Schlauchanschlussstück (10, 20'), welches einen Bereich zur Aufnahme eines Schlauchendes (102) aufweist, sowie mit einer Pressfassung (30') und einem Einsatz (40'), wobei der Einsatz (40') in der Pressfassung (30') ruht, wobei im Montagefall der Einsatz (40') und die Pressfassung (30') das Schlauchanschlussstück (10, 20') mit dem darauf aufgeschobenen Schlauch (50') umfassen, wobei im Befestigungsfall der Einsatz (40') den Schlauch (50') hält, wobei das Schlauchanschlussstück (10, 20') durch Anwendung äußeren, radialen Drucks (37') vom Montagefall in den Befestigungsfall überführbar ist, wobei auf der Außenseite des Schlauchanschlussstücks (10, 20') wenigstens eine umlaufende Dichtrille (20) zur Abdichtung der Schlauchverbindung vorgesehen ist, **dadurch gekennzeichnet, dass** der Einsatz (40') und die Fassung (30') derart ausgeführt sind, dass die Längenänderung (49') des Einsatzes (40') beim Übergang vom Montagefall in den Befestigungsfall geringer ist als jene der Fassung (30') und eine longitudinale Bewegung des Einsatzes (40') in der Pressfassung (30') möglich ist.

2. Schlauchkupplung (10') nach Anspruch 1, **dadurch gekennzeichnet, dass** es sich bei dem Schlauchanschlussstück (10) um einen Schlauchnippel oder eine Schlauchtülle handelt.

3. Schlauchkupplung (10') nach Anspruch 1 oder 2, **dadurch gekennzeichnet, dass** sich die Dichtrille (20) im Bereich des Endes des Schlauchanschlussstückes (10) befindet, an dem der Schlauch (100) auf das Schlauchanschlussstück (10) aufgeschoben wird.

4. Schlauchkupplung (10') nach einem der vorhergehenden Ansprüche, **dadurch gekennzeichnet, dass** das Schlauchende (102) auf dem Schlauchanschlussstück (10) mittels einer Pressfassung (70) verpresst ist, wobei die Dichtrille (20) relativ zu der Pressfassung (70) derart angeordnet ist, dass sich die Dichtrille (20) in einem Bereich befindet, in dem die Pressfassung (70) auf das Schlauchende (102) keine oder nur geringe in axialer Richtung des Schlauchanschlussstückes (10) wirkende Kräfte ausübt.

5. Schlauchkupplung (10') nach einem der vorhergehenden Ansprüche, **dadurch gekennzeichnet, dass** die Dichtrille (20) in einem Bereich (30) des Schlauchanschlussstückes (10) vorgesehen ist, der auf seiner Außenseite zylindrisch ausgeführt ist.

6. Schlauchkupplung (10') nach Anspruch 5, **dadurch gekennzeichnet, dass** sich an den zylindrischen Bereich (30) ein konisch zulaufender Endbereich (40) des Schlauchanschlussstückes (10) anschließt.

7. Schlauchkupplung (10') nach einem der vorhergehenden Ansprüche, **dadurch gekennzeichnet, dass** der Bereich zur Aufnahme des Schlauchendes (102) ein Profil (50) zur Fixierung des aufgeschobenen Schlauchendes (102) und dazu benachbart einen Bereich aufweist, in dem die Dichtrille (20) zur Abdichtung der Schlauchverbindung vorgesehen ist.

8. Schlauchkupplung (10') nach Anspruch 7, **dadurch gekennzeichnet, dass** der Bereich, in dem die Dichtrille (20) angeordnet ist, zwischen dem Bereich, der das Profil (50) zur Fixierung des aufgeschobenen Schlauchendes (102) aufweist, und dem Endbereich des Schlauchanschlussstückes (10) vorgesehen ist, an dem der Schlauch (100) auf das Schlauchanschlussstück (10) aufgeschoben wird

9. Schlauchkupplung (10') nach einem der vorhergehenden Ansprüche, **dadurch gekennzeichnet, dass** die Dichtrille (20) zwei im wesentlichen parallele Wandungen aufweist.

10. Schlauchkupplung (10') nach Anspruch 9, **dadurch gekennzeichnet, dass** die Wandungen senkrecht oder im wesentlichen senkrecht zu der Oberfläche des Bereiches des Schlauchanschlussstückes (10) verlaufen, in dem die Dichtrille (20) angeordnet ist.

11. Schlauchkupplung (10') nach Anspruch 10, **dadurch gekennzeichnet, dass** die Dichtrille (20) einen U-förmigen Querschnitt aufweist.

12. Schlauchkupplung (10') nach einem der vorhergehenden Ansprüche, **dadurch gekennzeichnet, dass** die Tiefe und die Breite der Dichtrille (20) im wesentlichen übereinstimmen.

13. Schlauchkupplung (10') nach einem der Ansprüche 1 bis 12, **dadurch gekennzeichnet, dass** auf das Schlauchanschlussstück (10) das Schlauchende (102) eines Schlauches (100) aufgepresst ist und dass Schlauchmaterial des Schlauchendes (102) in der Dichtrille (20) des Schlauchanschlussstückes (10) aufgenommen ist.

14. Schlauchkupplung (10') nach einem der vorhergehenden Ansprüche, **dadurch gekennzeichnet, dass** es sich bei dem Schlauchanschlussstück (20') um ein rohrartiges Kupplungselement handelt, das an einem Ende (25') an eine Armatur anschließbar ist und am anderen Ende (26') einen Schlauchnippel (22') für einen Schlauch (50') aufweist und dass die Pressfassung (30') zylinderförmig ausgeführt ist.

15. Schlauchkupplung (10') nach einem der vorhergehenden Ansprüche, **dadurch gekennzeichnet, dass** der Einsatz (40') in der Pressfassung (30') ruht und auf seiner Innenfläche Schlauchgreifvorrichtungen (42') besitzt, die im Befestigungsfall den Schlauch (50') halten.

16. Schlauchkupplung (10') nach einem der vorhergehenden Ansprüche, **dadurch gekennzeichnet, dass** die Wandstärke (41') des Einsatzes (40') geringer ist als jene (31') der Fassung (30').

17. Schlauchkupplung (10') nach einem der vorhergehenden Ansprüche, **dadurch gekennzeichnet, dass** die Materialmenge, aus der der Einsatz (40') besteht, geringer ist als jene der Fassung (30').

18. Schlauchkupplung (10') nach einem der vorhergehenden Ansprüche, **dadurch gekennzeichnet, dass** der Einsatz (40') einteilig und zylinderförmig ist oder aus mehreren Zylinderabschnitten besteht.

19. Schlauchkupplung (10') nach einem der vorhergehenden Ansprüche, **dadurch gekennzeichnet, dass** der Einsatz (40') aus einem spiralförmig geformten Material aufgebaut ist und insbesondere in Form einer Spiralfeder ausgeführt ist.

20. Schlauchkupplung (10') nach einem der vorhergehenden Ansprüche, **dadurch gekennzeichnet, dass** der Einsatz (40') ein Gitternetz ist.

21. Schlauchkupplung (10') nach einem der vorhergehenden Ansprüche, **dadurch gekennzeichnet, dass** die Innenlänge (35') der Pressfassung (30') länger ist als die Gesamtlänge (43') des Einsatzes (40').

22. Schlauchkupplung (10') nach einem der Ansprüche 15 bis 21, **dadurch gekennzeichnet, dass** die Schlauchgreifvorrichtungen (42') aus im Inneren des bzw. der Einsätze (40') umlaufenden Rippen besteht.

23. Schlauchkupplung (10') nach Anspruch 22, **dadurch gekennzeichnet, dass** die Rippen im Querschnitt dreiecksartig oder sägezahnartig sind.

24. Schlauchkupplung (10') nach einem der vorhergehenden Ansprüche, **dadurch gekennzeichnet, dass** die Schlauchgreifvorrichtungen (42') aus in das Innere des Einsatzes (40') hineinragenden einzelnen Vorsprüngen aufgebaut sind.

25. Schlauchkupplung (10') nach einem der Ansprüche 15 bis 24, **dadurch gekennzeichnet, dass** die Schlauchgreifvorrichtungen (42') Stauchungsfalten des Einsatzes (40') sind.

26. Schlauchkupplung (10') nach einem der vorhergehenden Ansprüche, **dadurch gekennzeichnet, dass** die Strukturen der Schlauchgreifvorrichtungen (42') an das Webmuster des Drahtgeflechtes (52') des Schlauches (50') angepaßt sind.

27. Schlauchkupplung (10') nach einem der vorhergehenden Ansprüche, **dadurch gekennzeichnet, dass** der bzw. die Einsätze (40') einschubseitig eine Fase (46') besitzen.

28. Schlauchkupplung (10') nach einem der vorhergehenden Ansprüche, **dadurch gekennzeichnet, dass** die Außenflächen des bzw. der Einsätze (40') Vertiefungen aufweisen oder dass in die Außenfläche des bzw. der Einsätze (40') Aussparungen eingebracht sind.

29. Schlauchkupplung (10') nach einem der Ansprüche 19 bis 28, **dadurch gekennzeichnet, dass** die als Einsatz fungierende Spiralfeder einen rautenförmigen Querschnitt aufweist.

30. Schlauchkupplung (10') nach einem der vorhergehenden Ansprüche, **dadurch gekennzeichnet, dass** die Pressfassung (30') und der Einsatz (40') aus Automatenstahl besteht.

31. Schlaucharmatur mit einer Schlauchkupplung (10') nach einem der vorhergehenden Ansprüche.

## Claims

1. A hose coupling (10') comprising a hose connection piece (10, 20') having a region for the reception of a hose end (102), and comprising a press-fit holder (30') and an insert (40'), wherein the insert (40') rests in the press-fit holder (30'); wherein, in the assembly case, the insert (40') and the press-fit holder (30') enclose the hose connection piece (10, 20') with the hose (50') pushed thereon; wherein, in the securing case, the insert (40') holds the hose (50'); wherein the hose connection piece (10, 20') can be moved from the assembly case into the securing case by application of external, radial pressure (37'), wherein at least one peripheral sealing groove (20) is provided at the outside of the hose connection piece (10, 20') for the sealing of the hose connection, **characterized in that** the insert (40') and the holder (30') are made such that a length change (49') of the insert (40') on the transition from the assembly case into the securing case is lower than that of the holder (30') and a longitudinal movement of the insert (40') in the press-fit holder (30') is possible.

2. A hose coupling (10') in accordance with claim 1, wherein the hose connection piece (10) is a hose nipple or a hose nozzle.

3. A hose coupling (10') in accordance with either of claims 1 or 2, wherein the sealing groove (20) is located in the region of the end of the hose connection piece (10) at which the hose (100) is pushed onto the hose connection piece (10).

4. A hose coupling (10') in accordance with any one of the preceding claims, wherein the hose end (102) is pressed on the hose connection piece (10) by means of a press-fit holder (70), wherein the sealing groove (20) is arranged relative to the press-fit holder (70) such that the sealing groove (20) is located in a region in which the press-fit holder (70) exerts no forces, or only low forces, on the hose end (102) acting in the axial direction of the hose connection piece (10).

5. A hose coupling (10') in accordance with any one of the preceding claims, wherein the sealing groove (20) is provided in a region (30) of the hose connection piece (10) which is made in cylindrical shape at its outer side.

6. A hose coupling (10') in accordance with claim 5, wherein a conically tapering end region (40) of the hose connection piece (10) adjoins the cylindrical region (30).

7. A hose coupling (10') in accordance with any one of the preceding claims, wherein the region for the reception of the hose end (102) has a section (50) for the fixing of the pushed-on hose end (102) and, adjacent to it, a region in which the sealing groove (20) is provided for the sealing of the hose connection.

8. A hose coupling (10') in accordance with claim 7, wherein the region in which the sealing groove (20) is arranged is provided between the region which has the section (50) for the fixing of the pushed-on hose end (102) and the end region of the hose connection piece (10) at which the hose (100) is pushed onto the hose connection piece (10).

9. A hose coupling (10') in accordance with any one of the preceding claims, wherein the sealing groove (20) has two substantially parallel walls.

10. A hose coupling (10') in accordance with claim 9, wherein the walls extend perpendicular or substantially perpendicular to the surface of the region of the hose connection piece (10) in which the sealing groove (20) is arranged.

11. A hose coupling (10') in accordance with claim 10, wherein the sealing groove (20) has a U-shaped cross-section.

12. A hose coupling (10') in accordance with any one of the preceding claims, wherein the depth and the width of the sealing groove (20) substantially coincide.

13. A hose coupling (10') in accordance with any one of the claims 1 to 12, wherein the hose end (102) of a hose (100) is pressed onto the hose connection piece (10) and hose material of the hose end (102) is received in the sealing groove (20) of the hose connection piece (10).

14. A hose coupling (10') in accordance with any one of the preceding claims, wherein the hose connection piece (20') is a tubular coupling element which can be connected at one end (25') to a fitting and at the other end (26') has a hose nipple (22') for a hose (50') and wherein the press-fit holder (30') is made in cylinder shape.

15. A hose coupling (10') in accordance with any one of the preceding claims, wherein the insert (40') rests in the press-fit holder (30') and has hose gripping means (42') at its interior surface which hold the hose (50') in the securing case.

16. A hose coupling (10') in accordance with any one of the preceding claims, wherein the wall thickness (41') of the insert (40') is lower than that (31') of the holder (30').

17. A hose coupling (10') in accordance with any one of the preceding claims, wherein the material amount of which the insert (40') consists is lower than that of the holder (30').

18. A hose coupling (10') in accordance with any one of the preceding claims, wherein the insert (40') is in one part and cylindrical or consists of a plurality of cylinder sections.

19. A hose coupling (10') in accordance with any one of the preceding claims, wherein the insert (40') is made up of a spirally shaped material and is in particular made in the form of a spiral spring.

20. A hose coupling (10') in accordance with any one of the preceding claims, wherein the insert (40') is a lattice.

21. A hose coupling (10') in accordance with any one of the preceding claims, wherein the internal length (35') of the press-fit holder (30') is longer than the total length (43') of the insert (40').

22. A hose coupling (10') in accordance with any one of the claims 15 to 21, wherein the hose gripping means (42') consist of ribs on the periphery of the interior of the insert or inserts (40').

23. A hose coupling (10') in accordance with claim 22, wherein the ribs are triangular or sawtooth-like in cross-section.

24. A hose coupling (10') in accordance with any one of the preceding claims, wherein the hose gripping means (42') are made up of individual projections projecting into the interior of the insert (40').

25. A hose coupling (10') in accordance with any one of the claims 15 to 24, wherein the hose gripping means (42') are compression folds of the insert (40').

26. A hose coupling (10') in accordance with any one of the preceding claims, wherein the structures of the hose gripping means (42') are matched to the web pattern of the wire net (52') of the hose (50').

27. A hose coupling (10') in accordance with any one of the preceding claims, wherein the insert(s) (40') have a chamfer (46') on the push-in side.

28. A hose coupling (10') in accordance with any one of the preceding claims, wherein the outer surfaces of the insert(s) (40') have recesses; or wherein cut-outs are introduced into the outer surface of the insert(s) (40').

29. A hose coupling (10') in accordance with any one of the claims 19 to 28, wherein the spiral spring acting as an insert has a diamond-shaped cross-section.

30. A hose coupling (10') in accordance with any one of the preceding claims, wherein the press-fit holder (30') and the insert (40') consist of free-cutting steel.

31. A hose fitting having a hose coupling (10') in accordance with any one of the preceding claims.

## Revendications

1. Coupleur de tuyau flexible (10') avec un raccord de tuyau flexible (10, 20'), qui présente une zone destinée au support d'un embout de tuyau flexible (102), ainsi qu'avec une prise serrée (30') et un insert (40'), l'insert (40') reposant dans la prise serrée (30'), sachant qu'en cas de montage, l'insert (40') et la prise serrée (30') enserrent le raccord de tuyau flexible (10, 20') avec le tuyau flexible (50') enfoncé sur celui-ci, sachant qu'en cas de fixation, l'insert (40') retient le tuyau (50'), le raccord de tuyau flexible (10, 20') étant apte à passer du cas de montage au cas de fixation par application d'une pression radiale (37') extérieure, sachant qu'à l'extérieur du raccord de tuyau flexible (10, 20'), au moins une gorge d'étanchéité (20) tournante est prévue pour étanchéifier la liaison de tuyaux flexibles,
**caractérisé en ce que**
l'insert (40') et la prise (30') sont configurés de manière à ce que la modification de longueur (49') de l'insert (40') est inférieure lors du passage du cas de montage au cas de fixation à celle de la prise (30') et **en ce qu'**un mouvement longitudinal de l'insert (40') dans la prise serrée (30') est possible.

2. Coupleur de tuyau flexible (10') selon la revendication 1, **caractérisé en ce que** dans le cas du raccord de tuyau flexible (10), il s'agit d'un tube de jonction ou d'un embout à olive.

3. Coupleur de tuyau flexible (10') selon la revendication 1 ou 2, **caractérisé en ce que** la gorge d'étanchéité (20) se trouve dans la zone de l'embout du raccord de tuyau flexible (10), dans laquelle le tuyau flexible (100) est enfoncé sur le raccord de tuyau flexible (10).

4. Coupleur de tuyau flexible (10') selon une quelconque des revendications précédentes, **caractérisé en ce que** l'embout de tuyau flexible (102) est enfoncé sur le raccord de tuyau flexible (10) à l'aide d'une prise serrée (70), la gorge d'étanchéité (20) étant agencée par rapport à la prise serrée (70) de manière à ce que la gorge d'étanchéité (20) se trouve dans une zone dans laquelle la prise serrée (70) sur l'embout de tuyau flexible (102) n'exerce aucune force ou seulement des forces faibles dans la direction axiale du raccord de tuyau flexible (10).

5. Coupleur de tuyau flexible (10') selon une quelconque des revendications précédentes, **caractérisé en ce que** la gorge d'étanchéité (20) est prévue dans une zone (30) du raccord de tuyau flexible (10), qui est agencée cylindriquement à l'extérieur de celui-ci.

6. Coupleur de tuyau flexible (10') selon la revendication 5, **caractérisé en ce qu'**une extrémité à arrivée conique (40) du raccord de tuyau flexible (10) se raccorde sur la zone cylindrique (30).

7. Coupleur de tuyau flexible (10') selon une quelconque des revendications précédentes, **caractérisé en ce que** la zone destinée au support de l'embout de tuyau flexible (102) présente un profil (50) destiné à la fixation de l'embout de tuyau flexible (102) enfoncé et voisine à celui-ci une zone, dans laquelle la gorge d'étanchéité (20) est prévue pour étanchéifier la liaison de tuyaux flexibles.

8. Coupleur de tuyau flexible (10') selon la revendication 7, **caractérisé en ce que** la zone, dans laquelle est disposée la gorge d'étanchéité (20) est prévue entre la zone que le profil (50) présente pour la fixation de l'embout de tuyau flexible enfoncé (102) et la zone d'extrémité du raccord de tuyau flexible (10), sur laquelle le tuyau flexible (100) est enfoncé sur le raccord de tuyau flexible (10).

9. Coupleur de tuyau flexible (10') selon une quelconque des revendications précédentes, **caractérisé en ce que** la gorge d'étanchéité (20) présente deux cloisons parallèles pour l'essentiel.

10. Coupleur de tuyau flexible (10') selon la revendication 9, **caractérisé en ce que** les cloisons passent de manière perpendiculaire ou pour l'essentiel de manière perpendiculaire par rapport à la surface de la zone du raccord de tuyau flexible (10) dans laquelle est disposée la gorge d'étanchéité (20).

11. Coupleur de tuyau flexible (10') selon la revendication 10, **caractérisé en ce que** la gorge d'étanchéité (20) présente une section transversale en forme d'U.

12. Coupleur de tuyau flexible (10') selon une quelconque des revendications précédentes, **caractérisé en ce que** la profondeur et la largeur de la gorge d'étanchéité (20) coïncident pour l'essentiel.

13. Coupleur de tuyau flexible (10') selon une des revendications 1 à 12, **caractérisé en ce que** l'embout de tuyau flexible (102) d'un tuyau (100) est enfoncé sur le raccord de tuyau flexible (10) et **en ce que** la matière de tuyau flexible de l'embout de tuyau flexible (102) est logée dans la gorge d'étanchéité (20) du raccord de tuyau flexible (10).

14. Coupleur de tuyau flexible (10') selon une quelconque des revendications précédentes, **caractérisé en ce que** dans le cas du raccord de tuyau flexible (20'), il s'agit d'un élément coupleur tubulaire qui est raccordable sur une extrémité (25') à une robinetterie et présente à l'autre extrémité (26') un raccord (22') pour un tuyau flexible (50') et **en ce que** la prise serrée (30') est construite en forme cylindrique.

15. Coupleur de tuyau flexible (10') selon une quelconque des revendications précédentes, **caractérisé en ce que** l'insert (40') repose dans la prise serrée (30') et possède sur sa surface intérieure des dispositifs de préhension à griffes des tuyaux flexibles (42'), qui maintiennent le tuyau flexible (50') en cas de fixation.

16. Coupleur de tuyau flexible (10') selon une quelconque des revendications précédentes, **caractérisé en ce que** l'épaisseur de paroi (41') de l'insert (40') est inférieure à celle (31') de la prise (30').

17. Coupleur de tuyau flexible (10') selon une quelconque des revendications précédentes, **caractérisé en ce que** le volume de matière dont est constitué l'insert (40') est inférieur à celui de la prise (30').

18. Coupleur de tuyau flexible (10') selon une quelconque des revendications précédentes, **caractérisé en ce que** l'insert (40') est en une partie et cylindrique ou constitué de plusieurs sections cylindriques.

19. Coupleur de tuyau flexible (10') selon une quelconque des revendications précédentes, **caractérisé en ce que** l'insert (40') est construit en une matière façonnée en forme de spirale et notamment constitué en forme de ressort en spirale.

20. Coupleur de tuyau flexible (10') selon une quelconque des revendications précédentes, **caractérisé en ce que** l'insert (40') est un réseau de treillage.

21. Coupleur de tuyau flexible (10') selon une quelconque des revendications précédentes, **caractérisé en ce que** la longueur interne (35') de la prise serrée (30') est plus longue que la longueur totale (43') de l'insert (40').

22. Coupleur de tuyau flexible (10') selon une quelconque des revendications 15 à 21, **caractérisé en ce que** les dispositifs de préhension à griffes des tuyaux flexibles (42') sont composés de nervures réparties à l'intérieur de l'insert ou des inserts (40').

23. Coupleur de tuyau flexible (10') selon la revendication 22, **caractérisé en ce que** les nervures sont triangulaires ou en dents de scie dans la section.

24. Coupleur de tuyau flexible (10') selon une quelconque des revendications précédentes, **caractérisé en ce que** les dispositifs de préhension à griffes des tuyaux flexibles (42') sont constitués de proéminences individuelles faisant saillie à l'intérieur de l'insert (40').

25. Coupleur de tuyau flexible (10') selon une quelconque des revendications 15 à 24, **caractérisé en ce que** les dispositifs de préhension à griffes des tuyaux flexibles (42') sont des plis de refoulement de l'insert (40').

26. Coupleur de tuyau flexible (10') selon une quelconque des revendications précédentes, **caractérisé en ce que** les structures des dispositifs de préhension à griffes des tuyaux flexibles (42') sont adaptées au dessin d'armure du grillage en fil métallique (52') du tuyau flexible (50').

27. Coupleur de tuyau flexible (10') selon une quelconque des revendications précédentes, **caractérisé en ce que** le ou les inserts (40') possèdent un biseau (46') du côté de l'insertion.

28. Coupleur de tuyau flexible (10') selon une quelconque des revendications précédentes, **caractérisé en ce que** les surfaces extérieures de l'insert ou des inserts (40') présentent des renfoncements ou **en ce que** des échancrures sont produites dans la surface extérieure de l'insert ou des inserts (40').

29. Coupleur de tuyau flexible (10') selon une quelconque des revendications 19 à 28, **caractérisé en ce que** le ressort en spirale fonctionnant comme insert présente une section transversale en losange.

30. Coupleur de tuyau flexible (10') selon une quelconque des revendications précédentes, **caractérisé en ce que** la prise serrée (30') et l'insert (40') sont constitués d'acier de décolletage.

31. Raccord pour tuyau flexible avec un coupleur de tuyau flexible (10') selon une quelconque des revendications précédentes.
